# EUROPEAN PATENT SPECIFICATION

(11) **EP 1 695 521 B1**
(45) Date of publication and mention of the grant of the patent: **31.03.2010**
(21) Application number: 04769668.7
(22) Date of filing: 19.10.2004
(51) Int. Cl.: H04L 29/12, H04L 29/06

(54) **APPLICATION SERVER ADRESSING**
ANWENDUNGSSERVER-ADRESSIERUNG
ADRESSAGE DE SERVEUR D'APPLICATION

(30) Priority: 19.12.2003 EP 03029377; 21.06.2004 US 871326
(43) Date of publication of application: 30.08.2006
(73) Proprietor: Nokia Siemens Networks Oy, 02610 Espoo (FI)
(72) Inventor: TIAINEN, Vesa, FIN-01630 Vantaa (FI); HUOTARI, Seppo, FIN-02600 Espoo (FI); ROTSTEN, Kirsi, FIN-01900 Nurmijärvi (FI)
(74) Representative: Borgström, Markus
(86) International application number: PCT/IB2004/003410
(87) International publication number: WO 2005/064896

(56) References cited:
- WO-A-02/071720
- DE-A1- 19 842 673
- US-A1- 2003 108 000

## Description

### FIELD OF THE INVENTION

The present invention relates to 3GPP (Third Generation Partnership Project) AS (Application Server) architecture. In particular, the invention relates to addressing a serving entity such as an application server in a communication network, e.g. an IP (Internet Protocol) subsystem such as an IMS (IP Multimedia core network Subsystem).

### BACKGROUND OF THE INVENTION

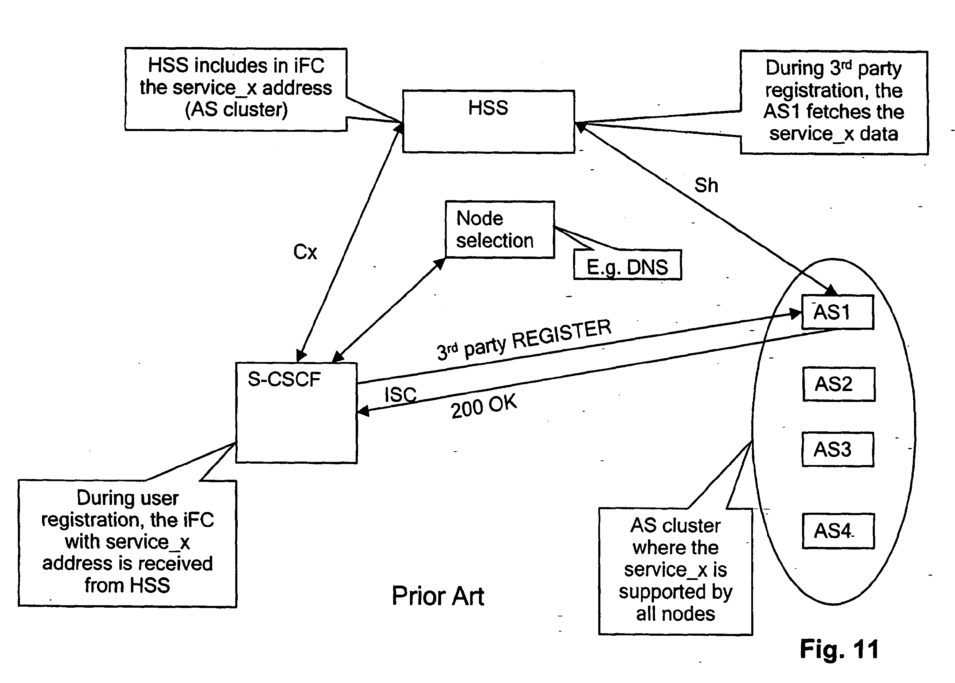

Fig. 11 shows signaling for third party registration at an application server group or cluster comprising application server nodes (AS nodes) AS1 to AS4 in an IMS.

A serving call state control function S-CSCF provides session control for a user equipment (not shown). A home subscriber server HSS comprises an HLR (Home Location Register) and UMS (User Mobility Server) and provides for user identification and access and service authorization. The AS nodes A1 to A4 offer value added IP multimedia services and host and execute services.

It is assumed that all AS nodes A1 to A4 belonging to the AS cluster support a service_x. In case of a subscriber registration, the S-CSCF receives via a Cx interface filter criterion (FC) data, i.e. initial FC data (iFC data), from the HSS which has included the address of an application server into the iFC data.

In other words, the application server address is part of the FC data received by the S-CSCF from the HSS during subscriber registration phase. According to a network configuration, this address accesses a fixed AS node or randomly a node of a possible cluster of AS nodes.

According to Fig. 11, the S-CSCF receives the AS cluster as service_x address from the HSS and performs a node selection e.g. on the basis of a fixed upper layer subscriber related parameter. During this procedure, the S-CSCF may refer to a domain name server DNS. For example, the subscriber related parameter may be the calling user's Public Identity.

In Fig. 11, the node AS1 is selected, and the S-CSCF sends a third party register message to the selected node AS1 via an ISC (IMS Service Control) interface. During the third party registration phase the selected node AS1 fetches the subscriber's service_x data from the HSS via an Sh interface, and sends an acknowledgment message '2000K' via the ISC interface back to the S-CSCF. The node AS1 will then be selected later on when the service_x is run.

With respect to load balancing in networks, there are two main load balancing principles, static and dynamic. The static load balancing is based on some information always existing when a server is to be selected, i.e. typically on a subscriber identity. Using this static method, transaction loads can be different due to some subscriber causing more transactions in the network.

The dynamic load balancing is based on some algorithm, e.g. round-robin or random algorithm, which can achieve a better load balancing of the servers. Using such algorithm, if all requests require substantially the same load, or if the dynamic load balancing can be augmented with a feedback of the load of the servers, a new request will be served by the less loaded server.

However, with the above node selection based on a fixed subscriber related parameter, no dynamic load sharing can be used. Moreover, in case the AS configuration is changed, also subscriber data have to be modified.
The WO 02/071720 A discloses a system for addressing a data source in an IP network by using an anycast address. When initiating a service request a service user may address the service request to an anycast address representing all the servers for the service in question. An anycast addressed server may bind its real unicast IPv6 address to the anycast address. The Binding Update is included with the first packet sent in response to the anycast addressed service request. The service user, i.e. the client or correspondent node, responds with a packet being sent directly to the server. As soon as the binding update is being processed by the client, an anycast agent 6 is cut from the packet delivery route from the client to the server.

### SUMMARY OF THE INVENTION

It is an object of the invention to improve a serving entity selection in a registration procedure.

This object is achieved by a method according to claim 1, a network control entity according to claim 13 and a network system according to claim 21.

The invention may also be implemented as computer program product.

Further features of the invention are defined in the dependent claims.

The node selection according to the present invention enables the use of dynamic load sharing including a network load sharing between network nodes as well as an internal load sharing in a cluster of nodes.

Moreover, in case a service address is used in FC data, the actual AS configuration can be changed without modifying subscriber data in HSS.

### BRIEF DESCRIPTION OF THE DRAWINGS

Fig. 1 shows a schematic block diagram of a communication network for addressing a serving entity according to the invention.

Fig. 2 shows a schematic block diagram illustrating a control entity and a serving entity according to the invention.

Fig. 3 shows a schematic block diagram of a part of an IMS network for addressing an application server according to a first embodiment of the invention.

Fig. 4 shows a signaling diagram illustrating signaling between IMS network components according to the first embodiment of the invention.

Fig. 5 shows a signaling diagram illustrating an example of AS load balancing according to the invention.

Fig. 6. shows a signaling diagram illustrating signaling between IMS network components in case of a user profile update according to a second embodiment of the invention.

Fig. 7 shows a signaling diagram illustrating signaling between IMS network components in case of a user profile update according to a third embodiment of the invention.

Fig. 8 shows a signaling diagram illustrating signaling between IMS network components in case of a user profile update according to a fourth embodiment of the invention.

Figs. 9 and 10 show signaling diagrams illustrating signaling between IMS network components in case of a user profile update according to a fifth embodiment of the invention.

Fig. 11 shows a schematic block diagram of a part of an IMS network including signaling according to the prior art.

### DESCRIPTION OF THE INVENTION

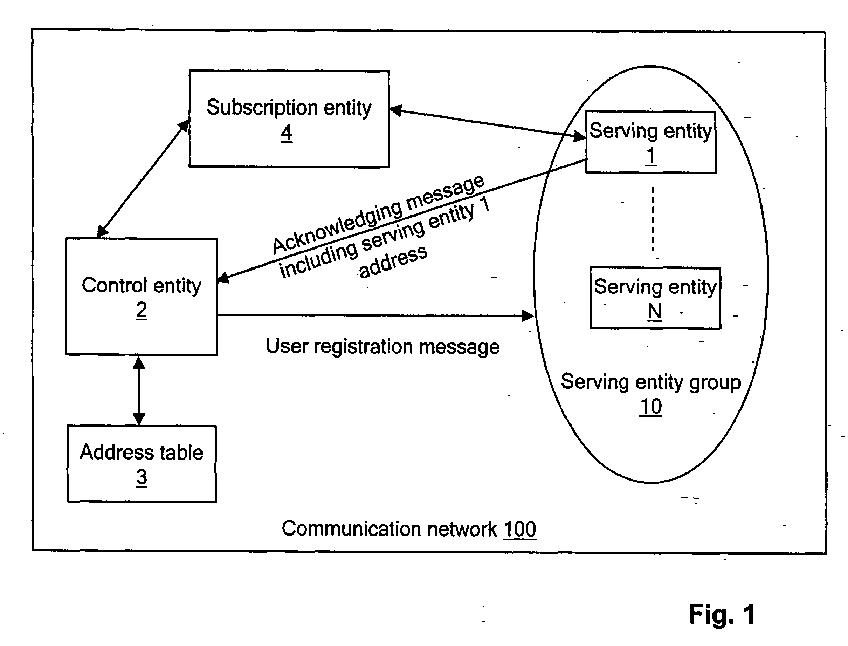

As shown in Fig. 1, a serving entity 1 such as an application server (AS) node for supporting a service in a communication network 100, e.g. an IP subsystem such as IMS, is part of a serving entity group or AS cluster 10 which comprises a plurality of serving entities or AS nodes 1 to N.

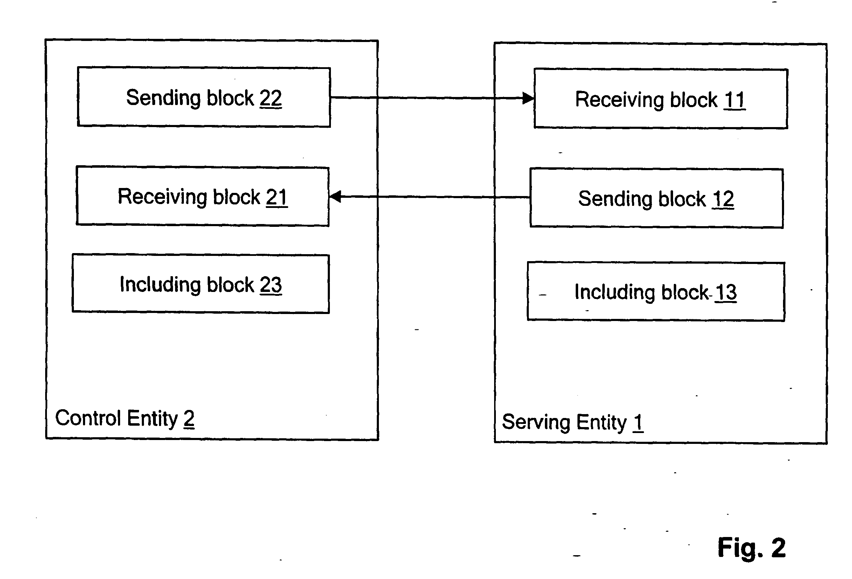

According to the invention, the serving entity group 10 is arranged to receive a user registration message for a service for a subscriber from a control entity 2 such as an S-CSCF, each of the plurality of serving entities 1 to N being arranged to support the service. For example, a serving entity 1 may receive the user registration message by means of a receiving block 11 as shown in Fig. 2. A serving entity, e.g. the serving entity 1, for supporting the service is selected out of the plurality of serving entities 1 to N. The selected serving entity 1 comprises an including block 13 for including the address, of the serving entity 1 into a message acknowledging the received registration message and a sending block 12 for sending the acknowledging message back to the control entity 2.

The control entity 2 which has sent the user registration message for the service to the serving entity group 10 on the basis of a service address by means of a sending block 22, receives the message acknowledging the sent registration message and including the address of the selected serving entity 1 by means of a receiving block 21. Upon receipt of this message, the control entity 2 includes the address of the selected serving entity 1 into an address table 3 for the subscriber by means of an including block 23, the address table 3 comprising service addresses and serving entity addresses. Per subscriber an address table is provided. The control entity 2 may receive the service address from a subscription entity 4 such as an HSS (Home Subscriber Server).

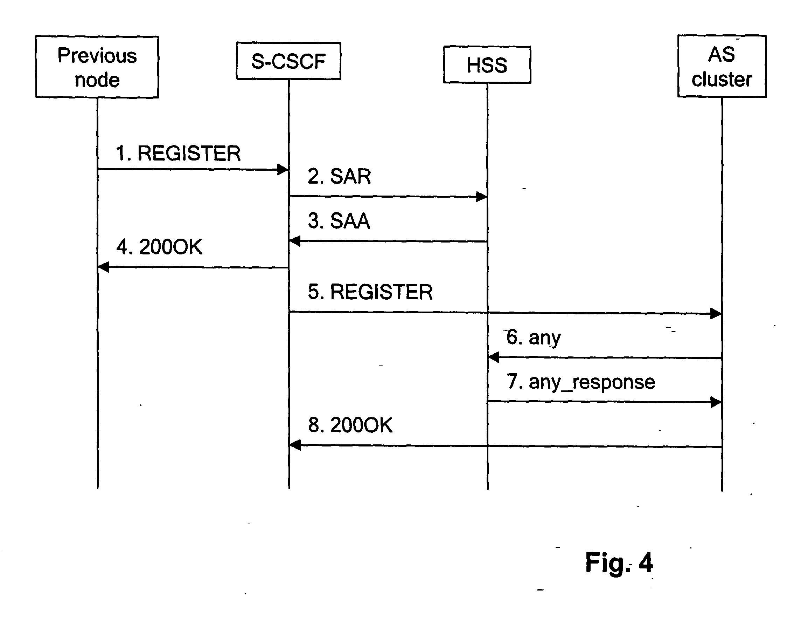

Upon triggering a service, the control entity 2 may refer to the address table 3 on the basis of a service address of the triggered service, the service address being received from the subscription entity 4, for example. In case the address table includes a serving entity address for the service to be triggered, the control entity 2 may use this serving entity address for triggering the service. In case the address table 3 does not include a serving entity address for the service to be triggered, the control entity 2 may use the service address for triggering the service as it is described in connection with Fig. 4.

According to the invention, a registration procedure such as a third party registration procedure in IMS can return the selected serving entity address back to the control entity 2. The control entity 2 saves the returned serving entity address to the address table 3 of the subscriber. In further triggering of services the control entity 2 uses the address table 3 to get the actual serving entity address.

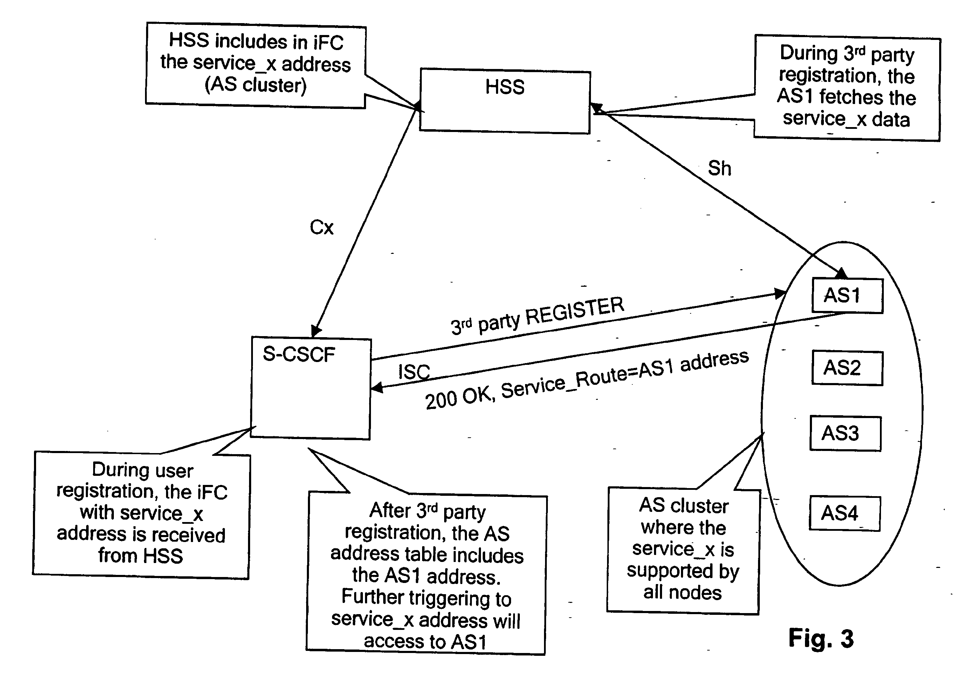

Fig. 3 shows an implementation example of the invention in an IMS environment. During subscriber registration, an S-CSCF (Serving Call State Control Function) receives FC data such as iFC (initial Filter Criterion) data via a Cx interface from an HSS (Home Subscriber Server), into which iFC data the HSS has included as service_x address for a requested service_x an address of an AS cluster supporting the service_x requested by the subscriber.

The S-CSCF sends a third party register message via an ISC (IMS Service Control) interface to the AS cluster indicated in the iFC data from the HSS. According to Fig. 3, an application server node AS1 is selected from the cluster for supporting the service. Thus, the node AS1 fetches service_x data via an Sh interface from the HSS during the third party registration, and returns its own node address in SIP (Session Initiation Protocol) response '200OK' of the third party registration. Details about SIP can be found in J. Rosenberg et al.: "SIP: Session Initiation Protocol", Network Working Group, RFC 3261, June 2002. The AS1 address may be included in Service Route or Contact header but is not restricted thereto. The address of the node AS1 may also be included into some other header.

After receiving the response message, the S-CSCF creates a new item in an AS address table of the subscriber and saves it to the subscriber data. Thus, the AS address table of the subscriber includes a connection between service addresses and AS node addresses. The address table may be located together with the subscriber data received from the HSS e.g. in a local subscription data repository in the S-CSCF.

In further triggering on the basis of an FC of the subscriber, a service address obtained from the FC data of the subscriber is used to access the AS address table of the subscriber. In case there is an entry of an AS node address for the service address in the AS address table, the AS node address is used when the AS cluster is contacted. In case no match is found in the AS address table for the service address, the service address obtained from the FC data is used when the AS cluster is contacted, e.g. by using a subscriber related parameter as described in connection with Fig. 11.

According to Fig. 3, after the third party registration, the AS address table includes the AS1 address. Hence, a further triggering to the service_x address will provide an access to the node AS 1.

Fig. 4 shows a signaling diagram illustrating signaling between the IMS network components shown in Fig. 3. In a communication 1, a user registration terminates at the S-CSCF from a previous node. In communications 2 and 3 (SAR: Server Assignment Request, SAA: Server Assignment Answer) the S-CSCF fetches user data from the HSS. The data includes the initial Filtering Criteria and the related AS cluster address. In a communication 4 the S-CSCF reports the success of the user registration to the previous node.

In a communication 5 the S-CSCF initiates a 3rd party registration towards the AS cluster the address of which has been received from the HSS. In the AS cluster, an AS node is selected. The node selection is based on any method in the communication network or the AS cluster. In communications 6 and 7 the selected AS node fetches service data from the HSS using any supported protocol. Finally, in a communication 8, the selected AS node responses towards the S-CSCF. The selected AS node address is included in the response message.

As can be understood from the above, the invention allows more flexibility for IMS. When AS addresses are changed to be dynamic, SIP load-balancing can be implemented on AS side by existing mechanisms.

There may be many types of Application Servers (AS) connected to the IMS system, one example being a PoC (Push-to-talk-over-cellular, also know as PTT, Push-To-Talk) As. IMS provides the AS capabilities that can be utilised to implement services for the subscribers. These capabilities include e.g. 3^{rd} party registration from IMS towards the AS.

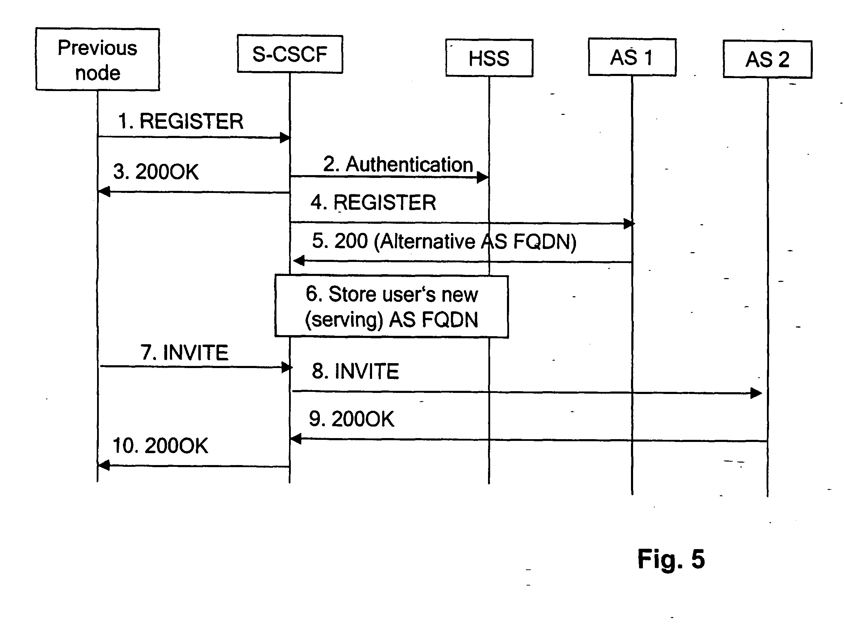

Fig. 5 shows a signaling diagram illustrating an example of AS load balancing according to the invention. When a user registers into services, e.g. PoC services, a first (provisioned) PoC AS 1 may return an alternative PoC AS FQDN (Fully Qualified Domain Name) (e.g. AS 2), which is to serve the user. In particular, in communication 1 in Fig. 5 a Register message is received by an S-CSCF. In communication 2 the S-CSCF performs authentication at an HSS of the user, i.e. it fetches user data from the HSS. The data includes the initial Filtering Criteria and an address of the provisioned PoC AS 1. In a communication 3 the S-CSCF reports the success of the user registration to the user via a previous node.

In a communication 4 the S-CSCF initiates a 3rd party registration towards the PoC AS 1 the address of which has been received from the HSS. In a communication 5, the PoC AS 1 responses towards the S-CSCF with an acknowledging message indicating the alternative PoC AS FQDN, e.g. the address of the PoC AS 2.

After this, in block 6 the new FQDN is stored into IMS e.g. to subscriber's local data storage, in which the original (provisional) AS name (AS 1) is replaced with the new AS name (AS 2). This may effect e.g. on subscriber's filter criteria information. The locally stored information should be stored for the rest of registration lifetime. All the following (sub-) requests (communications 7, 8) should be routed to the alternative AS.

In case an operator updates subscriber's information during the registration lifetime (by an HSS/UMS initiated update of User Profile) it is possible that the FQDN of the alternative PoC AS is lost.

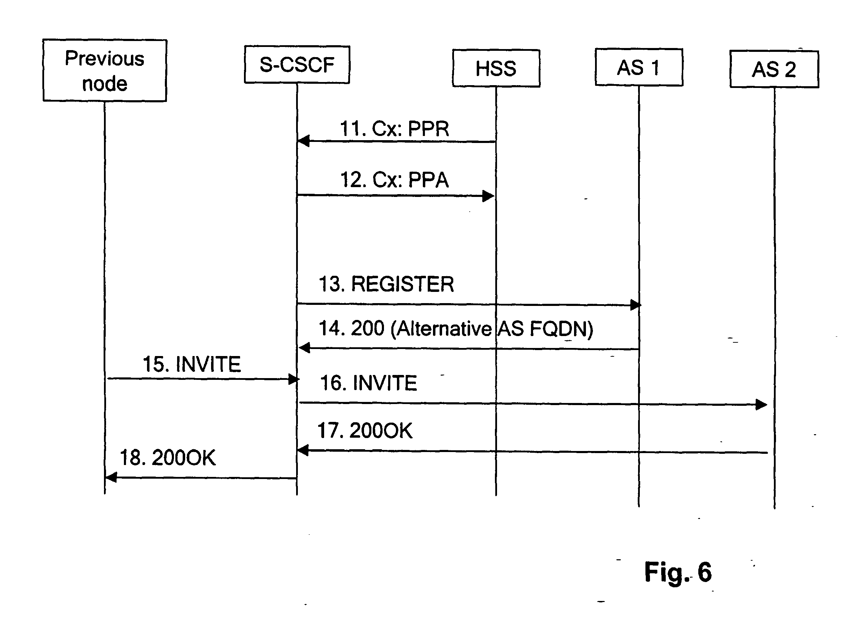

In the following, a second embodiment of the invention is described by referring to Fig. 6.

When the operator has updated the subscriber data in the HSS, in communication 11 following communication 10 in Fig. 5, the HSS reloads the information to the S-CSCF by a "Cx-Update_Subscr_Data" operation described in the Specification 3GPP TS 23.228. This procedure is mapped to a Push-Profile-Request (PPR) Diameter command described in the Specification 3GPP TS 29.229. The response Push-Profile-Answer (PPA) is sent to the HSS in communication 12 to confirm the successful update. After the update the IMS may check whether the update concerns the (special e.g. PoC) AS-subscribers.

In other words, the "HSS initiated update of User Profile" updates user profile information in the S-CSCF. This procedure corresponds to the functional level operation "Cx-Update_Subscr_Data" (see 3GPP TS 23.228). This procedure is mapped to the commands Push-Profile-Request/Answer in the Diameter application specified in 3GPP TS 29.229

The subscriber data update is done by the Push-Profile-Request (PPR) command (with Command-Code field set to 305 and the 'R' bit set in the Command Flags field) sent by a Diameter Multimedia server to a Diameter Multimedia client in order to update the subscription data of a multimedia user in the Diameter Multimedia client whenever a modification has occurred in the subscription data that constitutes the data used by the client.

The S-CSCF generates a new 3^{rd} party registration notification (communication 13) according to earlier received registration data and an AS FQDN defined in the updated subscriber data.

It is important to take the AS from the updated data, since it is possible that the operator has changed it. Thus, the 3^{rd} party registration may be directed to the AS1 or it may be made directly to the AS 2 in case the operator has re-provisioned the subscriber to be served permanently by this node.

If the PoC AS returns SIP 200 "OK" (as shown in communication 14 in Fig. 6 the message may contain the (new) PoC AS 2 FQDN e.g. in Service-Route), all the following (sub-) requests (communications 15, 16) should be routed to the alternative AS like before the update. In case an error message is received by the S-CSCF in reply to the Invite message in communication 16, the operator's configuration has a mismatch with the current situation. Then the S-CSCF has to generate an alarm or an error log to indicate to the operator a configuration error.

According to the second embodiment as shown in Fig. 6, the IMS generates a new 3^{rd} party registration notification according to earlier received registration data and the AS FQDN defined in the updated subscriber data right after the subscriber data update.

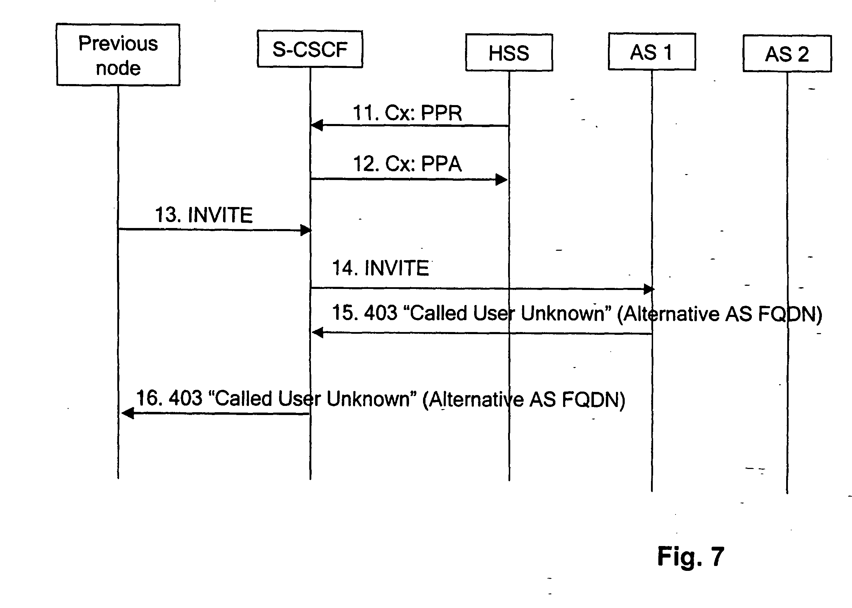

Fig. 7 shows a third embodiment of the invention. In communications 11 and 12, a subscriber data update is performed like in communications 11 and 12 in Fig. 6.

In case the IMS routes a SIP request from the user after the subscriber data update to the wrong PoC AS (to AS 1 instead of AS 2 as shown in Fig. 7), if the request is SIP REGISTER (as a re-registration), the PoC AS to which the S-CSCF routed the request returns SIP 200 "OK" with a correct PoC AS FQDN information stored e.g. into Service-Route. However, if the request is not SIP REGISTER but INVITE as shown in communications 13, 14 in Fig. 7, the PoC AS returns an appropriate error message (communication 15). The error message may contain a new PoC AS FQDN. The S-CSCF stores the received PoC AS FQDN to the subscriber's local data. As shown in communication 16 in Fig. 7, the S-CSCF may forward the error message to the user (with the received PoC AS FQDN).

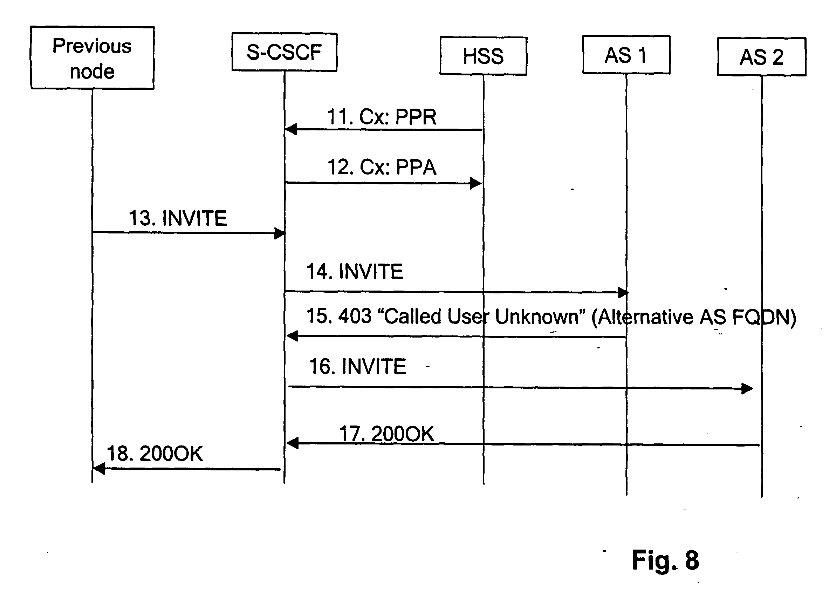

Alternatively, as shown in communications 16 to 18 in Fig. 8 illustrating a fourth embodiment of the invention, the S-CSCF may generate a new SIP INVITE message to the new PoC AS.

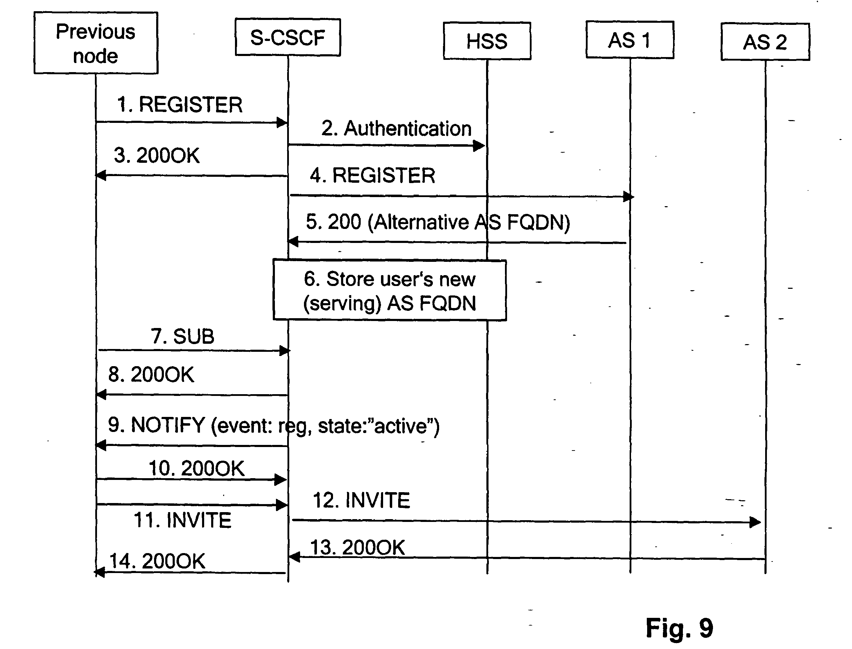

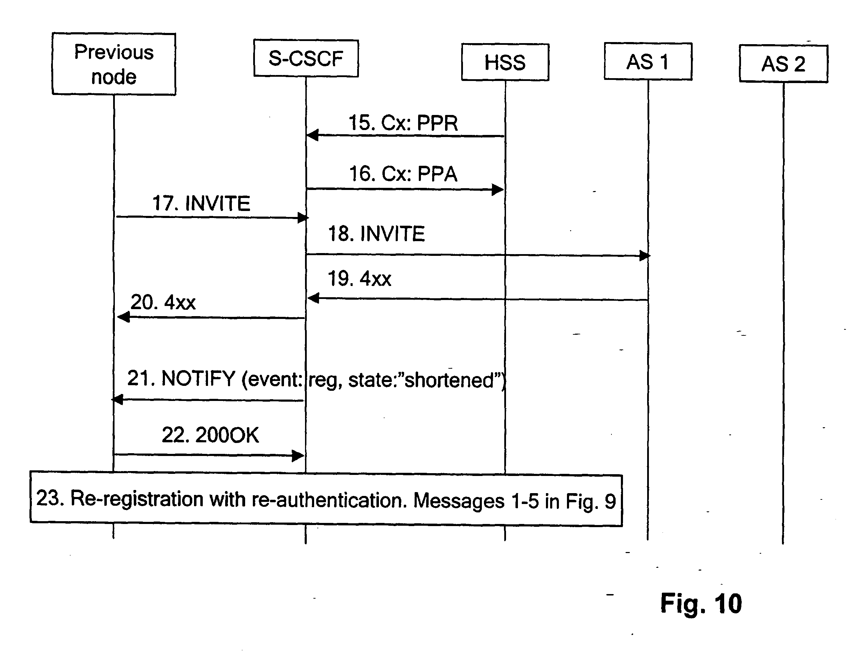

Figs. 9 and 10 show a fifth embodiment of the invention. Besides the communications shown in Fig. 5, Fig. 9 further illustrates in communications 7 to 10 a SUBSCRIBE request and a NOTIFY request with corresponding acknowledging messages. Such requests are described by Sipping WG, J. Rosenberg in "A Session Initiation Protocol (SIP) Event Package for Registrations", Internet Draft, October 28, 2002. In this document, an event package and mechanisms therefore are introduced.

Referring to Fig. 10, after a subscriber data update in communications 15 and 16, in case the IMS routes a SIP request to a wrong PoC AS (AS 1 in Fig. 10) (communications 17 and 18 in Fig. 10), the PoC AS 1 returns an appropriate error message in communication 19. As a result to this specific error situation, the S-CSCF sends (e.g. according to received control information included in the PPR message (communication 15), which may be added into xml format part) a SIP NOTIFY message to the subscriber (event: "shortened") via the previous node (communication 21) to inform the subscriber that a new registration and re-authentication is needed.

In a new registration procedure the AS FQDN updated by the operator is used in a new 3^{rd} party registration (communications 1 to 5 in Fig. 9 with updated AS FQDN). As a result the local information of subscriber's serving-AS is (re-) updated if needed. Any existing SIP sessions between the user and the PoC AS remain.

In the above described embodiments PoC services are used as example of usage. However, it is to be understood that the invention is not limited to PoC services but can be applied to any IMS application services.

It is to be understood that the above description is illustrative of the invention and is not to be construed as limiting the invention. Various modifications and applications may occur to those skilled in the art without departing from the scope of the invention as defined by the appended claims.

## Claims

1. A method for use in a serving call state control function (2) providing session control for a user equipment, for addressing a serving entity (1...N) in a communication network (100), the method comprising the steps of:
sending a user registration message for a service from the serving call state control function (2) to a serving entity group (10) according to a service address, the serving entity group (10) comprising a plurality of serving entities (1...N) to support the service;
receiving an acknowledging message which acknowledges the sent user registration message and includes an address of a serving entity (1...N) selected from the serving entity group (10) for supporting the service; and
upon receiving the acknowledging message, including the address of the selected serving entity (1...N) into an address table (3) comprising service addresses and serving entity addresses.

2. The method according to claim 1, further comprising the steps of:
referring to the address table (3) using the service address upon triggering the service; and
using the serving entity address for triggering the service if the address table includes the serving entity address to trigger the service.

3. The method according to claim 2, further comprising the step of:
using the service address for triggering the service if the address table does not include the serving entity address to trigger the service.

4. The method according to any one of claims 1 to 3, further comprising the step of:
receiving the service address from a subscription entity (4).

5. The method according to any one of claims 1 to 4, further comprising providing the address table per user.

6. The method according to any one of claims 1 to 5, comprising the steps of:
detecting an update of the service address; and
upon detecting the update, re-sending the user registration message for the service to the serving entity group according to the updated service address.

7. The method according to any one of claims 2 to 6, comprising the steps of:
receiving an error message in response to triggering the service, the error message including an address of another serving entity selected from the serving entity group for supporting the service; and
forwarding the error message to a user.

8. The method according to any one of claims 2 to 7, comprising the steps of:
receiving an error message in response to triggering the service, the error message including an address of another serving entity selected from the serving entity group for supporting the service; and
using the another serving entity address for triggering the service.

9. The method according to any one of claims 2 to 8, comprising the steps of:
receiving an error message in response to triggering the service; and
sending a notifying message to a user upon receiving the error message.

10. A computer program product comprising software code portions executing the method of any one of claims 1 to 9 when said product is run on a computer.

11. The computer program product according to claim 10, further comprising a computer-readable medium on which the software code portions are stored.

12. The computer program product according to claim 10, wherein the computer program product is directly loadable into an internal memory of the computer.

13. A network control entity (2) comprising a serving call state control function for providing session control to a user equipment, for addressing a serving entity (1...N) in a communication network (100), the network control entity (2) comprising: sending means (22) for sending a user registration message for a service to a serving entity group (10) according to a service address, the serving entity group (10) comprising a plurality of serving entities (1...N) to support the service;
receiving means (21) for receiving an acknowledging message which acknowledges the sent user registration message and includes an address of a serving entity (1...N) selected from the serving entity group (10) for supporting the service; and
including means (23) for including the address of the selected serving entity (1...N) into an address table (3) comprising services address and serving entity addresses upon receiving the acknowledging message.

14. The network control entity according to claim 13, further comprising:
referring means for referring to the address table according to the service address upon triggering a service; and
using means for using the serving entity address for triggering the service if the address table includes the serving entity address to trigger the service.

15. The network control entity according to claim 14, further comprising:
using means for using the service address for triggering the service if the address table does not include the serving entity address to trigger the service.

16. The network control entity according to any one of claims 13 to 15, further comprising:
receiving means for receiving the service address from a subscription entity.

17. The network control entity according to any one of claims 13 to 16, comprising:
detecting means for detecting an update of the service address,
wherein the sending means are configured to re-send the user registration message for the service to the serving entity group according to the updated service address upon detecting the update.

18. The network control entity according to any one of claims 14 to 17, wherein
the receiving means are configured to receive an error message in response to triggering the service, the error message including an address of another serving entity selected from the serving entity group for supporting the service; and
the sending means are configured to forward the error message to a user.

19. The network control entity according to any one of claims 14 to 18, wherein
the receiving means are configured to receive an error message in response to triggering the service, the error message including an address of another serving entity selected from the serving entity group for supporting the service; and
the using means are configured to use the another serving entity address for triggering the service.

20. The network control entity according to any one of claims 14 to 19, wherein
the receiving means are configured to receive an error message in response to triggering the service; and
the sending means are configured to send a notifying message to a user upon receipt of the error message by the receiving means.

21. A network system comprising:
a network control entity (2) comprising a serving call state control function for providing session control for a user equipment, for addressing a serving entity (1...N) in a communication network (100), the network control entity (2) including
sending means (22) for sending a user registration message for a service to a serving entity group (10) according to a service address, the serving entity group (10) comprising a plurality of serving entities (1...N) to support the service;
receiving means (21) for receiving an acknowledging message acknowledging the sent registration message and including an address of the serving entity (1...N) selected from the serving entity group (10) for supporting the service; and
including means (23) for including the address of the selected serving entity (1...N) in an address table (3) comprising service addresses and serving entity addresses upon receiving the acknowledging message; and
a serving entity (1...N) for supporting the service in the communication network (100), the serving entity part of the serving entity group (10) comprising the plurality of serving entities supporting the service, and receiving the user registration message for the service from the network control entity (2), the serving entity including
including means (13) for including an address of a serving entity (1...N) selected from the plurality of serving entities for supporting the service in the message acknowledging the received user registration message; and
sending means (12) for sending the acknowledging message to the network control entity (2).

## Patentansprüche

1. Verfahren zur Verwendung in einer Kommunikationssteuerung für eine Benutzereinrichtung bereitstellenden bedienenden Verbindungszusstandsteuerfunktion (2) zum Adressieren einer Bedieninstanz (1...N) in einem Kommunikationsnetz (100), wobei das Verfahren folgende Schritte umfaßt:
Senden einer Benutzerregistrierungsnachricht für einen Dienst von der bedienenden Verbindungszustandssteuerfunktion (2) zu einer Bedieninstanzengruppe (10) gemäß einer Dienstadresse, wobei die Bedieninstanzengruppe (10) eine Mehrzahl von Bedieninstanzen (1...N) zum Unterstützen des Dienstes umfaßt;
Empfangen einer bestätigenden Nachricht, die die gesendete Benutzerregistrierungsnachricht bestätigt und eine Adresse einer aus der Bedieninstanzengruppe (10) ausgewählten Bedieninstanz (1...N) zum Unterstützen des Dienstes enthält; und
bei Empfang der bestätigenden Nachricht Aufnehmen der Adresse der ausgewählten Bedieninstanz (1...N) in eine Adressentabelle (3) mit Dienstadressen und Bedieninstanzenadressen.

2. Verfahren nach Anspruch 1, weiterhin mit folgenden Schritten:
Bezugnehmen auf die Adressentabelle (3) unter Verwendung der Dienstadresse bei Triggern des Dienstes; und
Benutzen der Bedieninstanzenadresse zum Triggern des Dienstes, wenn die Adressentabelle die Bedieninstanzenadresse zum Triggern des Dienstes enthält.

3. Verfahren nach Anspruch 2, weiterhin mit folgendem Schritt:
Verwenden der Dienstadresse zum Triggern des Dienstes, wenn die Adressentabelle nicht die Bedieninstanzenadresse zum Triggern des Dienstes enthält.

4. Verfahren nach einem beliebigen der Ansprüche 1 bis 3, weiterhin mit folgendem Schritt:
Empfangen der Dienstadresse von einer Teilnahmeinstanz (4).

5. Verfahren nach einem beliebigen der Ansprüche 1 bis 4, weiterhin mit Bereitstellen der Adressentabelle pro Benutzer.

6. Verfahren nach einem beliebigen der Ansprüche 1 bis 5, mit folgenden Schritten:
Erkennen einer Aktualisierung der Dienstadresse; und
bei Erkennung der Aktualisierung Neusenden der Benutzerregistrierungsnachricht für den Dienst zu der Bedieninstanzengruppe gemäß der aktualisierten Dienstadresse.

7. Verfahren nach einem beliebigen der Ansprüche 2 bis 6, mit folgenden Schritten:
Empfangen einer Fehlernachricht als Reaktion auf das Triggern des Dienstes, wobei die Fehlernachricht eine Adresse einer anderen aus der Bedieninstanzengruppe ausgewählten Bedieninstanz zum Unterstützen des Dienstes enthält; und
Weiterleiten der Fehlernachricht an einen Benutzer.

8. Verfahren nach einem beliebigen der Ansprüche 2 bis 7, mit folgenden Schritten:
Empfangen einer Fehlernachricht als Reaktion auf das Triggern des Dienstes, wobei die Fehlernachricht eine Adresse einer weiteren aus der Bedieninstanzengruppe ausgewählten Bedieninstanz zum Unterstützen des Dienstes enthält; und
Benutzen der weiteren Bedieninstanzenadresse zum Triggern des Dienstes.

9. Verfahren nach einem beliebigen der Ansprüche 2 bis 8, mit folgenden Schritten:
Empfangen einer Fehlernachricht als Reaktion auf das Triggern des Dienstes; und
Senden einer Benachrichtigungsnachricht zu einem Benutzer bei Empfang der Fehlernachricht.

10. Computerprogrammprodukt mit bei Ablauf des Produktes auf einem Computer das Verfahren eines beliebigen der Ansprüche 1 bis 9 ausführenden Softwarecodeteilen.

11. Computerprogrammprodukt nach Anspruch 10, weiterhin mit einem computerlesbaren Medium, auf dem die Softwarecodeteile gespeichert sind.

12. Computerprogrammprodukt nach Anspruch 10, wobei das Computerprogrammprodukt direkt in einen internen Speicher des Computers einladbar ist.

13. Netzsteuerinstanz (2) mit einer bedienenden Verbindungszustandssteuerfunktion zum Bereitstellen von Kommunikationssteuerung für eine Benutzereinrichtung, zum Adressieren einer Bedieninstanz (1...N) in einem Kommunikationsnetz (100), wobei die Netzsteuerinstanz (2) folgendes umfaßt:
Sendemittel (22) zum Senden einer Benutzerregistrierungsnachricht für einen Dienst zu einer Bedieninstanzengruppe (10) gemäß einer Dienstadresse, wobei die Bedieninstanzengruppe (10) eine Mehrzahl von Bedieninstanzen (1...N) zum Unterstützen des Dienstes umfaßt;
Empfangsmittel (21) zum Empfangen einer bestätigenden Nachricht, die die gesendete Benutzerregistrierungsnachricht bestätigt und eine Adresse einer aus der Bedieninstanzengruppe (10) ausgewählten Bedieninstanz (1...N) zum Unterstützen des Dienstes enthält; und
mit Mitteln (23) zum Aufnehmen der Adresse der ausgewählten Bedieninstanz (1...N) in einer Adressentabelle (3) mit Dienstadressen und Bedieninstanzenadressen bei Empfang der bestätigenden Nachricht.

14. Netzsteuerinstanz nach Anspruch 13, weiterhin mit:
Bezugnahmemitteln zum Bezugnehmen auf die Adressentabelle gemäß der Dienstadresse bei Triggern eines Dienstes; und
Verwendungsmittel zum Verwenden der Bedieninstanzenadresse zum Triggern des Dienstes, wenn die Adressentabelle die Bedieninstanzenadresse zum Triggern des Dienstes enthält.

15. Netzsteuerinstanz nach Anspruch 14, weiterhin mit:
Verwendungsmittel zum Verwenden der Dienstadresse zum Triggern des Dienstes, wenn die Adressentabelle nicht die Bedieninstanzenadresse zum Triggern des Dienstes enthält.

16. Netzsteuerinstanz nach einem beliebigen der Ansprüche 13 bis 15, weiterhin mit:
Empfangsmitteln zum Empfangen der Dienstadresse von einer Teilnahmeinstanz.

17. Netzsteuerinstanz nach einem beliebigen der Ansprüche 13 bis 16, mit:
Erkennungsmitteln zum Erkenne einer Aktualisierung der Dienstadresse,
wobei Sendemittel zum Neusenden der Benutzerregistrierungsnachricht für den Dienst zu der Bedieninstanzengruppe gemäß der aktualisierten Dienstadresse bei Erkennung der Aktualisierung aufgebaut ist.

18. Netzsteuerinstanz nach einem beliebigen der Ansprüche 14 bis 17, wobei
die Empfangsmittel zum Empfangen einer Fehlernachricht als Reaktion auf das Triggern des Dienstes aufgebaut sind, wobei die Fehlernachricht eine Adresse einer weiteren aus der Bedieninstanzengruppe ausgewählten Bedieninstanz zum Unterstützen des Dienstes enthält; und
die Sendemittel zum Weiterleiten der Fehlernachricht zu einem Benutzer aufgebaut sind.

19. Netzsteuerinstanz nach einem beliebigen der Ansprüche 14 bis 18, wobei
die Empfangsmittel zum Empfangen einer Fehlernachricht als Reaktion auf das Triggern des Dienstes aufgebaut sind, wobei die Fehlernachricht eine Adresse einer weiteren aus der Bedieninstanzengruppe ausgewählten Bedieninstanz zum Unterstützen des Dienstes enthält; und
die Verwendungsmittel zum Verwenden der weiteren Bedieninstanzenadresse zum Triggern des Dienstes aufgebaut sind.

20. Netzsteuerinstanz nach einem beliebigen der Ansprüche 14 bis 19, wobei
die Empfangsmittel zum Empfangen einer Fehlernachricht als Reaktion auf das Triggern des Dienstes aufgebaut sind; und
die Sendemittel zum Senden einer Benachrichtigungsnachricht zu einem Benutzer bei Empfang der Fehlernachricht durch die Empfangsmittel aufgebaut sind.

21. Netzsystem mit folgendem:
einer Netzsteuerinstanz (2) mit einer bedienenden Verbindungszustandssteuerfunktion zum Bereitstellen von Kommunikationssteuerung für eine Benutzereinrichtung, zum Adressieren einer Bedieninstanz (1...N) in einem Kommunikationsnetz (100), wobei die Netzsteuerinstanz (2) folgendes enthält:
Sendemittel (22) zum Senden einer Benutzerregistrierungsnachricht für einen Dienst zu einer Bedieninstanzengruppe (10) gemäß einer Dienstadresse, wobei die Bedieninstanzengruppe (10) eine Mehrzahl von Bedieninstanzen (1...N) zum Unterstützen des Dienstes umfaßt;
Empfangsmittel (21) zum Empfangen einer die gesendete Registrierungsnachricht bestätigenden Bestätigungsnachricht und mit einer Adresse der aus der Bedieninstanzengruppe (10) ausgewählten Bedieninstanz (1...N) zum Unterstützen des Dienstes; und
mit Mitteln (23) zum Aufnehmen der Adresse der ausgewählten Bedieninstanz (1...N) in einer Adressentabelle (3) mit Dienstadressen und Bedieninstanzenadressen bei Empfang der bestätigenden Nachricht; und
eine Bedieninstanz (1...N) zum Unterstützen des Dienstes in dem Kommunikationsnetz (100), wobei die Bedieninstanz Teil der die Mehrzahl von den Dienst unterstützenden Bedieninstanzen umfassenden Bedieninstanzengruppe (10) ist und die Benutzerregistrierungsnachricht für den Dienst von der Netzsteuerinstanz (2) empfängt, wobei die Bedieninstanz folgendes enthält:
Aufnahmemittel (13) zum Aufnehmen einer Adresse einer aus der Mehrzahl von Bedieninstanzen ausgewählten Bedieninstanz (1...N) zum Unterstützen des Dienstes in der die empfangende Benutzerregistrierungsnachricht bestätigenden Nachricht; und
Sendemittel (12) zum Senden der bestätigenden Nachricht zu der Netzsteuerinstanz (2).

## Revendications

1. Procédé destiné à une utilisation dans une fonction de contrôle d'état d'appel de service (2) fournissant un contrôle de session pour un équipement d'utilisateur, pour l'adressage d'une entité de service (1 ... N) dans un réseau de communication (100), le procédé comprenant les étapes de :
envoi d'un message d'enregistrement d'utilisateur pour un service de la fonction de contrôle d'état d'appel de service (2) à un groupe d'entités de service (10) conformément à une adresse de service, le groupe d'entités de service (10) comprenant une pluralité d'entités de service (1 ... N) pour supporter le service ;
réception d'un message d'accusé de réception qui accuse réception du message d'enregistrement d'utilisateur envoyé et inclut une adresse d'une entité de service (1 ... N) choisie parmi le groupe d'entités de service (10) pour supporter le service ; et
à la réception du message d'accusé de réception, inclusion de l'adresse de l'entité de service (1 ... N) choisie dans une table d'adresses (3) comprenant des adresses de services et des adresses d'entités de service.

2. Procédé selon la revendication 1, comprenant en outre les étapes de :
référence à la table d'adresses (3) en utilisant l'adresse de service au déclenchement du service ; et
utilisation de l'adresse d'entité de service pour déclencher le service si la table d'adresses inclut l'adresse d'entité de service pour déclencher le service.

3. Procédé selon la revendication 2, comprenant en outre l'étape de :
utilisation de l'adresse de service pour déclencher le service si la table d'adresses n'inclut pas l'adresse d'entité de service pour déclencher le service.

4. Procédé selon l'une quelconque des revendications 1 à 3, comprenant en outre l'étape de :
réception de l'adresse de service d'une entité d' abonnement (4).

5. Procédé selon l'une quelconque des revendications 1 à 4, comprenant en outre la fourniture de la table d'adresses par utilisateur.

6. Procédé selon l'une quelconque des revendications 1 à 5, comprenant les étapes de :
détection d'une mise à jour de l'adresse de service ; et
à la détection de la mise à jour, renvoi du message d'enregistrement d'utilisateur pour le service au groupe d'entités de service conformément à l'adresse de service mise à jour.

7. Procédé selon l'une quelconque des revendications 2 à 6, comprenant les étapes de :
réception d'un message d'erreur en réponse au déclenchement du service, le message d'erreur incluant une adresse d'une autre entité de service choisie parmi le groupe d'entités de service pour supporter le service ; et
envoi du message d'erreur à un utilisateur.

8. Procédé selon l'une quelconque des revendications 2 à 7, comprenant les étapes de :
réception d'un message d'erreur en réponse au déclenchement du service, le message d'erreur incluant une adresse d'une autre entité de service choisie parmi le groupe d'entités de service pour supporter le service ; et
utilisation de l'autre adresse d'entité de service pour déclencher le service.

9. Procédé selon l'une quelconque des revendications 2 à 8, comprenant les étapes de :
réception d'un message d'erreur en réponse au déclenchement du service ; et
envoi d'un message de notification à un utilisateur à la réception du message d'erreur.

10. Produit de programme informatique comprenant des parties de code logiciel exécutant le procédé selon l'une quelconque des revendications 1 à 9 lorsque ledit produit tourne sur un ordinateur.

11. Produit de programme informatique selon la revendication 10, comprenant en outre un support lisible par ordinateur sur lequel les parties de code logiciel sont mémorisées.

12. Produit de programme informatique selon la revendication 10, dans lequel le produit de programme informatique peut être directement chargé dans une mémoire interne de l'ordinateur.

13. Entité de contrôle de réseau (2) comprenant une fonction de contrôle d'état d'appel de service pour fournir un contrôle de session à un équipement d'utilisateur, pour l'adressage d'une entité de service (1 ... N) dans un réseau de communication (100), l'entité de contrôle de réseau (2) comprenant :
un moyen d'envoi (22) pour envoyer un message d'enregistrement d'utilisateur pour un service à un groupe d'entités de service (10) conformément à une adresse de service, le groupe d'entités de service (10) comprenant une pluralité d'entités de service (1 ... N) pour supporter le service ;
un moyen de réception (21) pour recevoir un message d'accusé de réception qui accuse réception du message d'enregistrement d'utilisateur envoyé et inclut une adresse d'une entité de service (1 ... N) choisie parmi le groupe d'entités de service (10) pour supporter le service ; et
un moyen d'inclusion (23) pour inclure l'adresse de l'entité de service (1 ... N) choisie dans une table d'adresses (3) comprenant des adresses de services et des adresses d'entités de service à la réception du message d'accusé de réception.

14. Entité de contrôle de réseau selon la revendication 13, comprenant en outre :
un moyen de référence pour faire référence à la table d'adresses conformément à l'adresse de service au déclenchement d'un service ; et
un moyen d'utilisation pour utiliser l'adresse d'entité de service pour déclencher le service si la table d'adresses inclut l'adresse d'entité de service pour déclencher le service.

15. Entité de contrôle de réseau selon la revendication 14, comprenant en outre :
un moyen d'utilisation pour utiliser l'adresse de service pour déclencher le service si la table d'adresses n'inclut pas l'adresse d'entité de service pour déclencher le service.

16. Entité de contrôle de réseau selon l'une quelconque des revendications 13 à 15, comprenant en outre :
un moyen de réception pour recevoir l'adresse de service d'une entité d'abonnement.

17. Entité de contrôle de réseau selon l'une quelconque des revendications 13 à 16, comprenant :
un moyen de détection pour détecter une mise à jour de l'adresse de service,
dans laquelle le moyen d'envoi est configuré pour renvoyer le message d'enregistrement d'utilisateur pour le service au groupe d'entités de service conformément à l'adresse de service mise à jour à la détection de la mise à jour.

18. Entité de contrôle de réseau selon l'une quelconque des revendications 14 à 17, dans laquelle
le moyen de réception est configuré pour recevoir un message d'erreur en réponse au déclenchement du service, le message d'erreur incluant une adresse d'une autre entité de service choisie parmi le groupe d'entités de service pour supporter le service ; et
le moyen d'envoi est configuré pour envoyer le message d'erreur à un utilisateur.

19. Entité de contrôle de réseau selon l'une quelconque des revendications 14 à 18, dans laquelle
le moyen de réception est configuré pour recevoir un message d'erreur en réponse au déclenchement du service, le message d'erreur incluant une adresse d'une autre entité de service choisie parmi le groupe d'entités de service pour supporter le service ; et
le moyen d'utilisation est configuré pour utiliser l'autre adresse d'entité de service pour déclencher le service.

20. Entité de contrôle de réseau selon l'une quelconque des revendications 14 à 19, dans laquelle
le moyen de réception est configuré pour recevoir un message d'erreur en réponse au déclenchement du service ; et
le moyen d'envoi est configuré pour envoyer un message de notification à un utilisateur à la réception du message d'erreur par le moyen de réception.

21. Système de réseau comprenant :
une entité de contrôle de réseau (2) comprenant une fonction de contrôle d'état d'appel de service pour fournir un contrôle de session pour un équipement d'utilisateur, pour l'adressage d'une entité de service (1 ... N) dans un réseau de communication (100), l'entité de contrôle de réseau (2) incluant
un moyen d'envoi (22) pour envoyer un message d'enregistrement d'utilisateur pour un service à un groupe d'entités de service (10) conformément à une adresse de service, le groupe d'entités de service (10) comprenant une pluralité d'entités de service (1 ... N) pour supporter le service ;
un moyen de réception (21) pour recevoir un message d'accusé de réception accusant réception du message d'enregistrement envoyé et incluant une adresse de l'entité de service (1 ... N) choisie parmi le groupe d'entités de service (10) pour supporter le service ; et
un moyen d'inclusion (23) pour inclure l'adresse de l'entité de service (1 ... N) choisie dans une table d'adresses (3) comprenant des adresses de services et des adresses d'entités de service à la réception du message d'accusé de réception ; et
une entité de service (1 ... N) pour supporter le service dans le réseau de communication (100), l'entité de service faisant partie du groupe d'entités de service (10) comprenant la pluralité d'entités de service supportant le service et recevant le message d'enregistrement d'utilisateur pour le service de l'entité de contrôle de réseau (2), l'entité de service incluant
un moyen d'inclusion (13) pour inclure une adresse d'une entité de service (1 ... N) choisie parmi la pluralité d'entités de service pour supporter le service dans le message accusant réception du message d'enregistrement d'utilisateur reçu ; et
un moyen d'envoi (12) pour envoyer le message d'accusé de réception à l'entité de contrôle de réseau (2).
